# EUROPÄISCHE PATENTSCHRIFT

(11) **EP 1 707 028 B1**
(45) Veröffentlichungstag und Bekanntmachung des Hinweises auf die Patenterteilung: **06.03.2013**
(21) Anmeldenummer: 05700779.1
(22) Anmeldetag: 10.01.2005
(51) Int. Cl.: H04R 1/10

(54) **KOPFHÖRER**
HEADPHONES
CASQUE D'ECOUTE

(30) Priorität: 08.01.2004 DE 102004001442
(43) Veröffentlichungstag der Anmeldung: 04.10.2006
(73) Patentinhaber: Sennheiser electronic GmbH & Co. KG, 30900 Wedemark (DE)
(72) Erfinder: MANN, Wolfgang, 30916 Isernhagen (DE); GRELL, Axel, 31303 Burgdorf (DE); KÖNECKE, fred, 29336 Nienhagen (DE)
(74) Vertreter: Eisenführ, Speiser & Partner
(86) Internationale Anmeldenummer: PCT/EP2005/000137
(87) Internationale Veröffentlichungsnummer: WO 2005/067343

(56) Entgegenhaltungen:
- EP-A- 0 389 174
- WO-A-02/080504
- DE-A1- 10 033 919
- DE-A1- 19 546 633
- DE-A1- 19 802 659
- US-A- 5 113 428
- US-A- 5 931 683

## Beschreibung

Die vorliegende Erfindung betrifft einen Kopfhörer mit einer einseitigen geschwungenen Bügelaufhängung sowie einer schrägen Schallanwandlungsanordhung. Die Erfindung betrifft ferner einen drahtlosen Kopfhörer sowie eine entsprechende Ladestation für den drahtlosen Kopfhörer und schließlich ein drahtloses Kopfhörersystem.

Drahtlose Geräte wie beispielsweise drahtlose Kopfhörer weisen in der Regel einen wiederaufladbaren Akku auf. Um diesen Akku wiederaufzuladen, muss der drahtlose Kopfhörer über elektrische Kontaktflächen verfügen, welche stark oder schwach federnd ausgestaltet sein können. Stark federnde Kontakte weisen oftmals relativ lange Abmessungen auf. Bei schwach federnden Kontakten müssen die Kontakte jedoch formschlüssig zusammengebracht werden, damit der Akku entsprechend aufgeladen werden kann.

EP 0 389 174 offenbart einen drahtlosen Kopfhörer und eine Ladestation für einen drahtlosen Kopfhörer, die herausragende Stangen aufweist. Die Stangen werden als elektrische Zuleitung zur elektrischen Lade-Kontaktierung des drahtlosen Kopfhörers benutzt. US 5 931 683 betrifft ein Ladegerät für drahtlose Vorrichtungen. Die drahtlose Vorrichtung ist mit mindestens einem Magneten und elektrischen Ladekontakten bestückt. Bei der Aufladung des Geräts zieht der Magnet die mobilen Kontakte des Ladegeräts an.

Es ist somit Aufgabe der vorliegenden Erfindung, eine sichere elektrische Kontaktierung zum Aufladen von Akku-betriebenen Geräten vorzusehen.

Diese Aufgabe wird durch einen drahtlosen Kopfhörer nach Anspruch 1 und eine Ladestation gemäß Anspruch 3.

Somit wird ein drahtloser Kopfhörer mit Ladekontakten im Kopfhörerbügel und mit mindestens einem Magneten in dem Kopfhörerbügel vorgesehen. Die Erfindung betrifft ebenfalls eine Ladestation für einen entsprechenden drahtlosen Kopfhörer. Die Ladestation weist dabei Stangen als elektrische Zuleitung zur elektrischen Lade-Kontaktierung des drahtlosen Kopfhörers auf.

Die Erfindung betrifft ebenfalls ein mobiles Endgerät mit einem wiederaufladbaren Akku, mindestens einem Ladekontakt zum Aufladen des Akkus sowie einem Magneten im Bereich der Ladekontakte. Zur Aufladung des mobilen Endgerätes wird eine Ladestation vorgesehen, welche Ladekontakte sowie Magnete im Bereich der Ladekontakte aufweist.

Die Erfindung beruht auf dem Gedanken, eine Anziehung zweier elektrischer Kontaktflächen durch eine magnetische Anziehung zu bewirken. Hierbei kann ein Magnet auf einer oder beiden Seiten der Kontaktflächen für die nötige Anziehung sorgen.

Somit kann eine längere Lebensdauer ermöglicht werden, da die Kontaktfedern funktionell anfälliger sind und sich leicht verbiegen können. Durch eine magnetisch verstärkte Kontaktierung lassen sich höhere konstruktive Freiheitsgrade erreichen. Ferner kann eine derartige Kontaktierung lageunabhängig erfolgen.

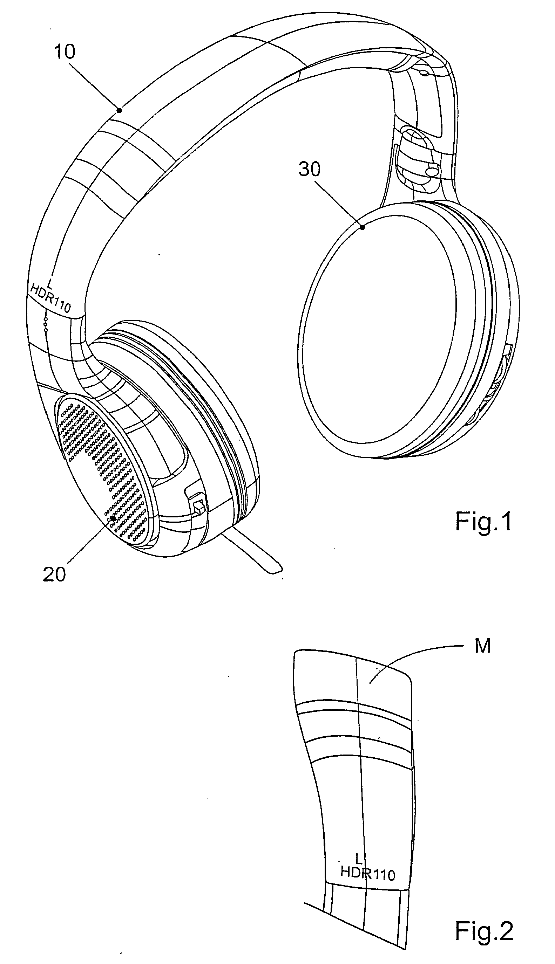

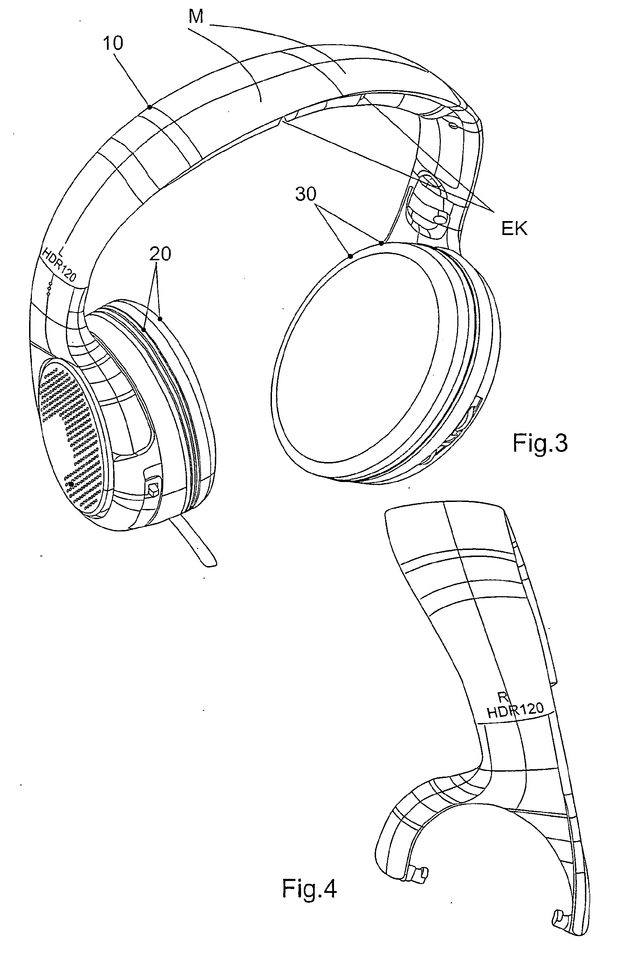

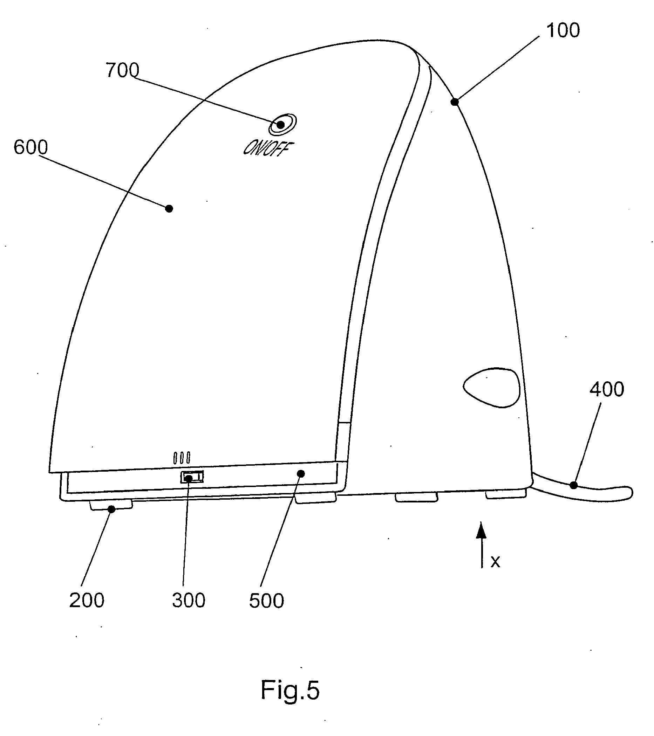

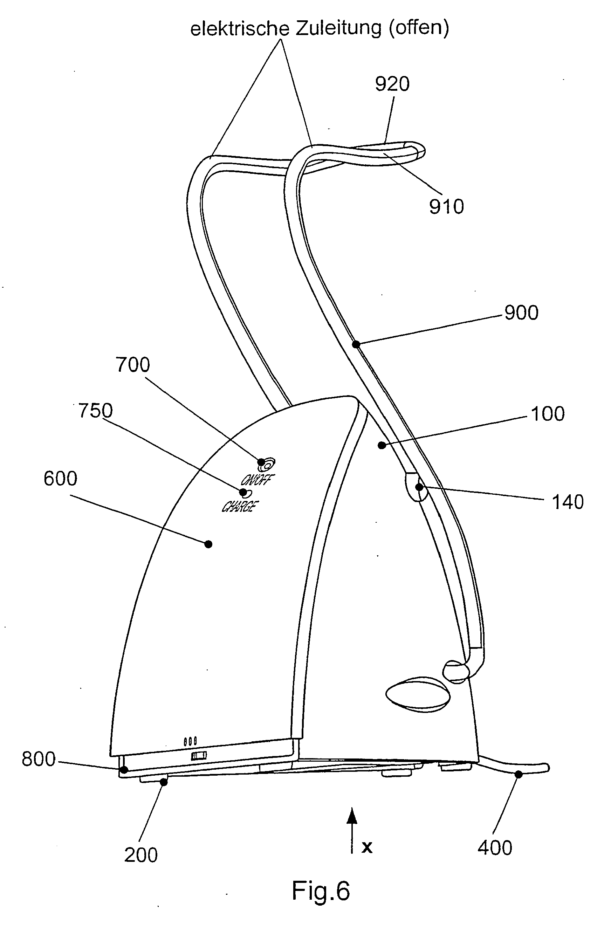

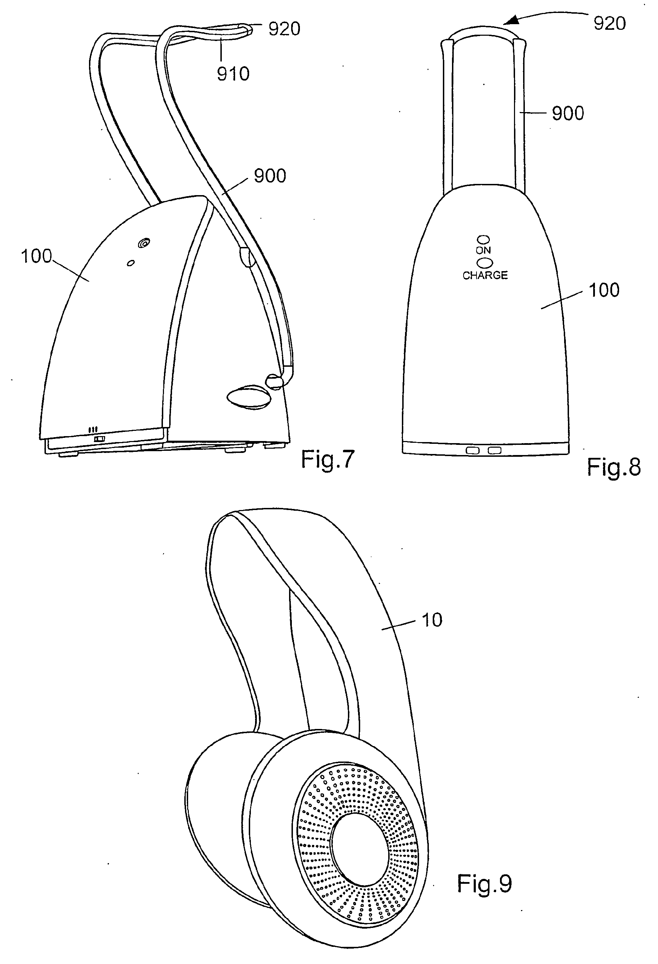

In den Figuren 1 bis 10 sind Details eines drahtlosen Kopfhörersystems mit einer Ladestation und einem drahtlosen Kopfhörer gezeigt. In den Figuren 11 bis 13 sind Details eines Kopfhörers gezeigt.

Fig. 1 zeigt eine Draufsicht auf einen Kopfhörer gemäß dem ersten Ausführungsbeispiel. Der Kopfhörer weist dabei zwei Wandler 20, 30 sowie einen Kopfbügel 10 auf.

Fig. 2 zeigt eine Seitenansicht eines Kopfbügels 10 von Fig. 1. In dem Kopfbügel 10 sind Magnete M angeordnet.

Fig. 3 zeigt eine Seitenansicht eines Kopfhörers gemäß dem ersten Ausführungsbeispiel. In dem Kopfbügel 10 sind sowohl Magnete M als auch elektrische Kontakte EK zum Aufladen des Kopfhörers angeordnet.

Fig. 4 zeigt eine Seitenansicht eines Kopfbügels des Kopfhörers von Fig. 3.

Fig. 5 zeigt eine Ansicht einer Ladestation für einen drahtlosen Kopfhörer. Die Ladestation 100 ist über ein Kabel 400 mit einer Spannungsversorgung verbunden. An der Unterseite der Ladestation sind Füße 200 angeordnet. Mittels eines Ein/Ausschalters 300 lässt sich die Ladestation ein- und ausschalten.

Fig. 6 zeigt ebenfalls eine Draufsicht auf eine Ladestation gemäß einem ersten Ausführungsbeispiel. Zusätzlich zu der Ladestation gemäß Fig. 5 weist die Ladestation gemäß Fig. 6 eine Stange 900 auf, welche der elektrischen Zuleitung dient. Somit weist die Stange 900, welche beispielsweise als offene elektrische Zuleitung ausgestaltet ist, einen Bereich 910 auf, welcher zur Aufnahme eines Kopfbügels eines Kopfhörers gemäß einem der Fig. 1 und 2 dient. Ferner ist ein isolierter Abschnitt 920 an der Zuleitung 900 vorgesehen, um die beiden elektrischen Zuleitungen gegeneinander zu isolieren.

Um die Stabilität der Zuleitung 900 zu erhöhen, kann ein Pufferelement 140 (beispielsweise aus Gummi) zwischen der Ladestation 100 und der Zuleitung 900 angeordnet werden.

Fig. 7 zeigt eine weitere Seitenansicht einer Ladestation von Fig. 6.

Fig. 8 zeigt eine Vorderansicht einer Ladestation von Fig. 6. Hierbei ist die Ladestation 100 sowie die Zuleitung 900 mit dem isolierten Abschnitt 920 gezeigt.

Fig. 9 zeigt einen weiteren Kopfhörer, insbesondere einen drahtlosen Kopfhörer, welcher zusammen mit der Ladestation gemäß den Fig. 6 bis 8 verwendet werden kann.

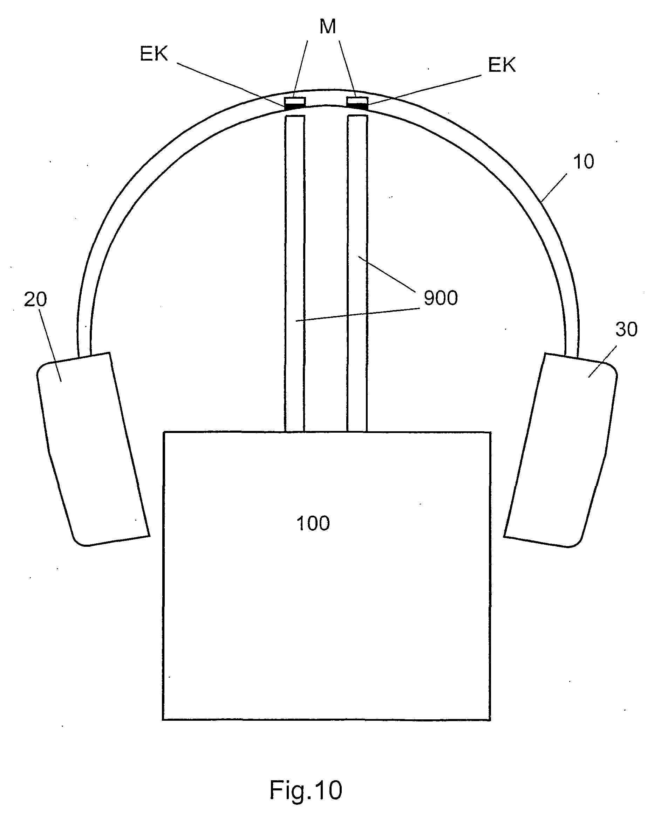

Fig. 10 zeigt eine schematische Darstellung einer Ladestation 100 mit einem entsprechenden Kopfhörer gemäß dem ersten Ausführungsbeispiel. Der (insbesondere drahtlose) Kopfhörer weist einen Bügel 10 mit Wandlern 20, 30 auf. An der Unterseite des Bügels 10 sind zwei elektrische Kontakte EK angeordnet. Oberhalb der elektrischen Kontakte sind Magnete M angeordnet. Vorzugsweise sind die Magnete und die elektrischen Kontakte voneinander isoliert. Ferner zeigt Fig. 10 eine Ladestation mit einer elektrischen Zuleitung 900. Dabei ist der Abstand zwischen den elektrischen Zuleitungen 900 und den elektrischen Kontakten EK in dem Bügel 10 des Kopfhörers derart ausgestaltet, dass wenn der Kopfhörer auf die elektrische Zuleitung gelegt wird, die elektrischen Kontakte EK mit der elektrischen Zuleitung 900 in Kontakt treten, so dass der Kopfhörer bzw. die sich darin befindlichen Akkus über die elektrische Zuleitung 900 und die elektrischen Kontakte EK aufgeladen werden kann.

Dieses drahtlose Kopfhörersystem basiert auf einem neuartigen Ladekonzept, bei dem man den Kopfbügel des Hörers einfach in die Ladevorrichtung legt. Eine Einrastung muss dabei nicht berücksichtigt werden, ebenso muss rechts oder links nicht berücksichtigt werden.

Der drahtlose Kopfhörer zeichnet sich dadurch aus, dass die Ladekontakte EK sich in dem Kopfbügel bevorzugt in der Mitte des Kopfbügels 10 befinden. Der Kopfbügel 10 weist ferner Magnete M auf, welche sich bevorzugt in der Nähe der elektrischen Kontakte EK befinden.

Diese Magnete bewirken hierbei einen Magnet-verstärkten Kontakt. Selbst wenn die elektrischen Kontakte in dem Kopfbügel nicht exakt auf den elektrischen Zuleitungen bzw. Stangen der Ladestation platziert werden, erfolgt eine automatische Platzierung der Kontakte durch die magnetische Anziehung der Magnete im Kopfbügel, d. h. die Stangen bzw. elektrischen Zuleitungen bestehen zumindest abschnittsweise aus magnetisierbarem Material.

Die Ladestation 100 für den drahtlosen Kopfhörer weist zwei Stangen 900 auf, welche aus der Ladestation herausragen. Diese beiden Stangen dienen als elektrische Zuleitung für die elektrischen Kontakte EK in dem drahtlosen Kopfhörer. Demzufolge muss der Abstand zwischen den Stangen 900 an ihren freien Enden im Wesentlichen dem Abstand der elektrischen Kontakte EK in dem Kopfbügel des Kopfhörers entsprechen. Die beiden Stangen 900 können auch an ihren freien Enden miteinander verbunden werden, wenn diese Verbindung elektrisch isolierend 920 ausgelegt ist.

Die Ladestation kann ebenfalls als Sende-/Empfangstation für den drahtlosen Kopfhörer dienen.

Alternativ können die elektrischen Kontakte und die Magnete auch in einem Nackenbügel eines Hinterkopf-Kopfhörers angeordnet werden. Die oben beschriebenen Prinzipien der Erfindung, d. h. ein magnetisch verstärkter Ladekontakt, lassen sich ebenfalls für einen induktiven Ladevorgang einsetzen, d. h. ohne elektrischen Kontakt, wobei eine Fixierung bzw. ihre Verbesserung mittels Magneten erfolgen kann.

Bei drahtlosen Kopfhörern mit einem wiederaufladbaren Akku erfolgt die Aufladung der Akkus in der Regel durch Absetzen des Kopfhörers und Positionieren des Kopfhörers auf eine entsprechende Ladestation. In der Regel müssen die aufzuladenden Akkus nicht entnommen werden, sondern eine elektrische Kontaktierung erfolgt über Kontakte, welche sowohl im Hörer als auch in der Ladestation angeordnet sind. Wie bereits oben beschrieben, werden häufig federnde Kontakte verwendet, um eine gute Kontaktierung zu gewährleisten. Wenn jedoch ein sicherer Kontakt über eine schwach federnde Kontaktfläche herzustellen ist, dann müssen die Kontakte formschlüssig, wie z. B. durch Führungen, zusammengebracht werden.

Gemäß der vorliegenden Erfindung wird ein kleiner Magnet an den Kontaktflächen im Kopfhörer angeordnet, so dass der Kopfhörer sicher auf einem Ladebügel einer Ladestation aufliegt. Die Haltekraft wird dabei durch die Ausgestaltung der Magnete bestimmt. Hierbei müssen die Kontaktflächen nicht notwendigerweise federnd ausgestaltet sein.

Alternativ zu dem oben beschriebenen Ausführungsbeispiel kann eine Magnet-verstärkte Kontaktierung dadurch erhalten werden, dass die Magnete an oder in einer Zuleitung bzw. an oder im Ladebügel der Ladestation angeordnet sind.

Das grundlegende Konzept der Erfindung, nämlich die Magnet-verstärkte Kontaktierung von zwei elektrischen Kontakten zum Aufladen eines Akkus, lässt sich nicht nur auf drahtlose Kopfhörer mit den entsprechenden Ladestationen anwenden, sondern auch auf beliebige mobile Endgeräte und deren Ladestationen (beispielsweise Mobiltelefone, PDA, portable Audioplayer, portable Videoplayer, portable Spielekonsolen etc.), Taschenrechner, portable Diktiergeräte, Taschenlampen, Digitalkameras, welche durch wiederaufladbare Akkus mit Strom versorgt werden. Entsprechendes gilt für drahtlose Mikrofone, Taschensender, In-Ear Hörer, Hörhilfen (jeweils auch drahtlos), schnurlose Haushaltsgeräte sowie alle anderen elektrischen oder elektronischen Geräte, welche eine wiederaufladbare Energiequelle aufweisen.

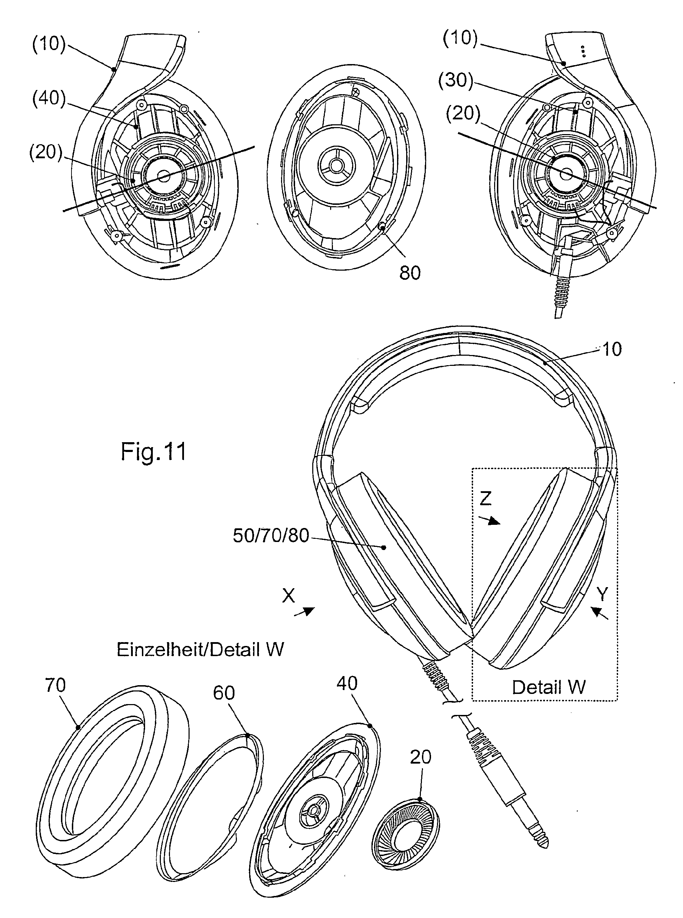

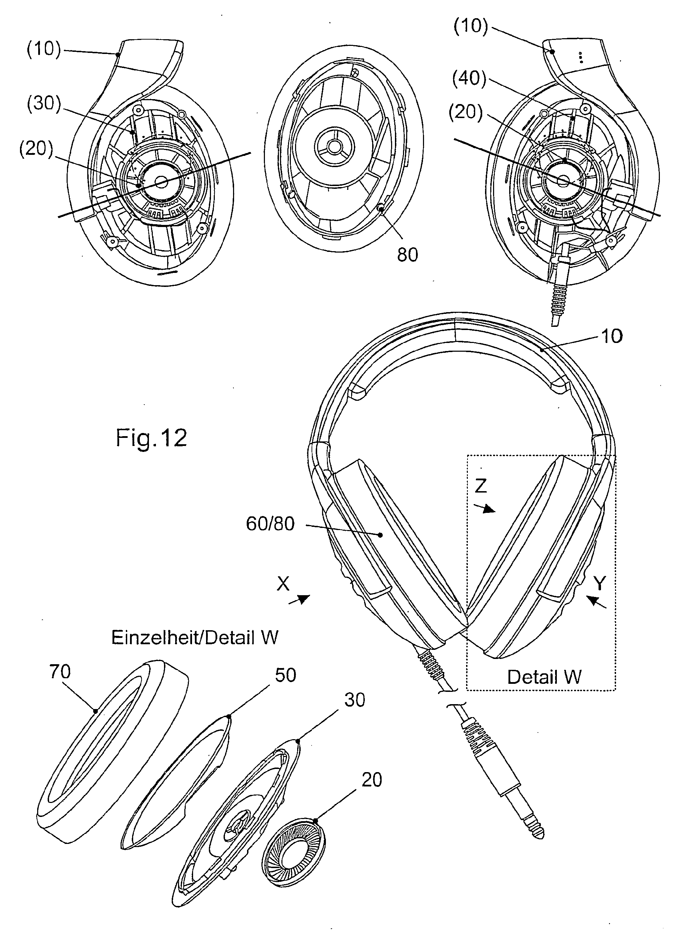

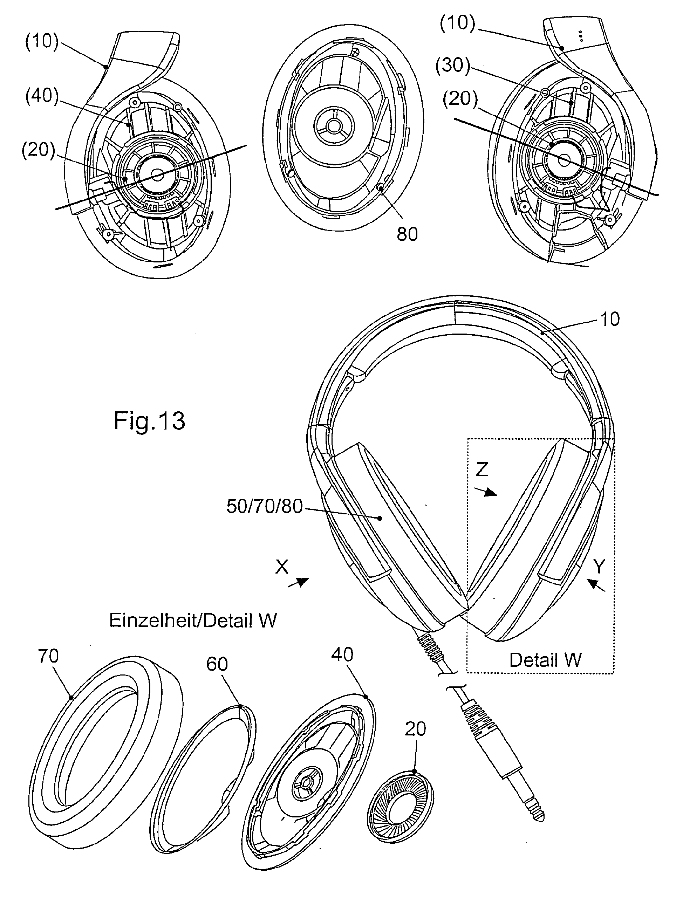

In den Fig. 11 bis 13 sind Details eines Kopfhörers gemäß einem zweiten Ausführungsbeispiel gezeigt. Schräge Schallwandlungsanordnung wird durch Anschrägung der Schallwandlungsanordnung ermöglicht.

Der Kopfhörer mit der einseitig geschwungenen Bügelaufhängung und der schrägen Schallwandlungsanordnung ermöglicht eine ideale Schallkanalisierung mit weniger Resonanzen.

## Patentansprüche

1. Drahtloses Kopfhörersystem, mit einem drahtlosen Kopfhörer mit einem Kopfhörerbügel, der elektrische Ladekontakte (EK) und mindestens einen Magneten (M) aufweist,
wobei die Magnete (M) und die elektrischen Ladekontakte (EK) zur Ladekontaktierung einander zugeordnet sind, und
einer Ladestation für den drahtlosen Kopfhörer mit einem Gehäuse und mindestens zwei aus dem Gehäuse herausragenden Stangen, wobei die Stangen ein erstes und zweites Ende aufweisen, wobei die ersten Enden mit dem Gehäuse gekoppelt sind und die zweiten Enden einen festen und im Wesentlichen horizontalen Abschnitt zum Aufnehmen des Kopfhörerbügels des drahtlosen Kopfhörers aufweisen, wobei die Stangen (900) als elektrische Zuleitung zur elektrischen Ladekontaktierung des drahtlosen Kopfhörers dienen, und
wobei der horizontale Abschnitt elektrische Kontakte zur elektrischen Ladekontaktierung der elektrischen Ladekontakte (EK) in dem Kopfhörerbügel aufweist.

2. Drahtloskopfhörersystem nach Anspruch 1, ferner mit zumindest einem Magneten in dem horizontalen Abschnitt,

3. Ladestation für einen Drahtloskopfhörer mit einem Kopfhörerbügel und elektrischen Ladekontakten in dem Kopfhörerbügel, mit
einem Gehäuse und
mindestens zwei Stangen, die aus dem Gehäuse herausragen, wobei die Stangen erste und zweite Enden aufweisen,
wobei das erste Ende mit dem Gehäuse gekoppelt ist und die zweiten Enden einen festen und im Wesentlichen horizontalen Abschnitt zur Aufnahme des Kopfhörerbügels des Kopfhörers aufweisen,
wobei der horizontale Abschnitt elektrische Kontakte zur elektrischen Kontaktierung der elektrischen Ladekontakte (EK) in dem Kopfhörerbügel aufweist.

## Claims

1. A wireless headphone system, comprising a wireless headphone set with a headphone band that has electrical charging contacts (EK) and at least one magnet (M),
wherein the magnets (M) and the electrical charging contacts (EK) are associated with each other for charge contacting, and
a charging station for the wireless headphone set, comprising a housing and at least two bars projecting out of the housing, wherein the bars have a first and second end, wherein the first ends are coupled to the housing and the second ends have a rigid and substantially horizontal portion for receiving the headphone band of the wireless headphone set, wherein the bars (900) serve as an electrical supply line for electrical charge contacting of the wireless headphone set, and
wherein the horizontal portion has electrical contacts for electrical charge contacting of the electrical charge contacts (EK) in the headphone band.

2. A wireless headphone system according to claim 1, further comprising at least one magnet in the horizontal portion.

3. A charging station for a wireless headphone set comprising a headphone band and electrical charging contacts in the headphone headband, comprising
a housing and
at least two bars which project out of the housing, wherein the bars have first and second ends,
wherein the first end is coupled to the housing and the second ends have a rigid and substantially horizontal portion for receiving the headphone band of the headphone set,
wherein the horizontal portion has electrical contacts for electrical contacting of the electrical charge contacts (EK) in the headphone band.

## Revendications

1. Système de casque d'écoute sans fil, comprenant un casque d'écoute sans fil doté d'un arceau de casque d'écoute, qui présente des contacts électriques de charge (EK) et au moins un aimant (M),
dans lequel les aimants (M) et les contacts électriques de charge (EK) sont arrangés entre eux de manière à établir le contact de charge, et
comprenant une station de charge pour le casque d'écoute sans fil, dotée d'un boîtier et d'au moins deux barres faisant saillie hors du boîtier, dans lequel les barres présentent une première extrémité et une deuxième extrémité, dans lequel les premières extrémités sont couplées au boîtier et les deuxièmes extrémités présentent une section fixe et essentiellement horizontale pour recevoir l'arceau de casque d'écoute du casque d'écoute sans fil, dans lequel les barres (900) servent de conduite d'alimentation électrique pour établir le contact de charge électrique du casque d'écoute sans fil, et
dans lequel la section horizontale présente des contacts électriques pour établir le contact de charge électrique des contacts électriques de charge (EK) dans l'arceau de casque d'écoute.

2. Système de casque d'écoute sans fil selon la revendication 1, comprenant en outre
au moins un aimant dans la section horizontale.

3. Station de charge pour un casque d'écoute sans fil doté d'un arceau de casque d'écoute et de contacts électriques de charge dans l'arceau de casque d'écoute, comprenant
un boîtier et
au moins deux barres faisant saillie hors du boîtier, dans lequel les barres présentent des premières et des deuxièmes extrémités,
dans lequel la première extrémité est couplée au boîtier et les deuxièmes extrémités présentent une section fixe et essentiellement horizontale pour recevoir l'arceau de casque d'écoute du casque d'écoute,
dans lequel la section horizontale présente des contacts électriques servant à établir le contact électrique des contacts électriques de charge (EK) dans l'arceau de casque d'écoute.
